(19) Europäisches Patentamt
European Patent Office
Office européen des brevets

(11) Veröffentlichungsnummer: **0 137 182**
**B1**

(12) # EUROPÄISCHE PATENTSCHRIFT

(45) Veröffentlichungstag der Patentschrift: **15.10.86**

(51) Int. Cl.⁴: **C 08 G 18/18**, C 08 G 18/28

(21) Anmeldenummer: **84109293.5**

(22) Anmeldetag: **06.08.84**

(54) **Verfahren zur Herstellung von gegebenenfalls zellförmigen Polyurethanen.**

(30) Priorität: **16.08.83 DE 3329452**

(43) Veröffentlichungstag der Anmeldung: **17.04.85 Patentblatt 85/16**

(45) Bekanntmachung des Hinweises auf die Patenterteilung: **15.10.86 Patentblatt 86/42**

(84) Benannte Vertragsstaaten: **BE DE FR GB IT SE**

(56) Entgegenhaltungen:
**DE-A-2 759 258**
**FR-A-1 179 085**
**US-A-4 049 931**

(73) Patentinhaber: **BAYER AG, Konzernverwaltung RP Patentabteilung, D-5090 Leverkusen 1 Bayerwerk (DE)**

(72) Erfinder: **Kopp, Richard, Dr., Wolfskaul 12, D-5000 Köln 80 (DE)**
Erfinder: **Freitag, Hans- Albrecht, Dr., Mülheimer Strasse 135, D-5060 Bergisch Gladbach 2 (DE)**

**EP 0 137 182 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Gegenstand der vorliegenden Erfindung ist ein Verfahren zur Herstellung von Polyurethanen, insbesondere Polyurethanschaumstoffen, bei dem hydroxyfunktionelle Poly(dialkylaminoalkyl)-ether als Katalysatoren verwendet werden.

Polyurethane mit den verschiedenartigsten physikalischen Eigenschaften werden nach dem bekannten Isocyanat-Polyadditionsverfahren aus Verbindungen mit mehreren aktiven Wasserstoffatomen, insbesondere Hydroxyl-, Amin- und/oder Carboxylgruppen enthaltenden Verbindungen, und Polyisocyanaten, gegebenenfalls unter Mitverwendung von Wasser und/oder organischen Treibmitteln, Katalysatoren, Emulgatoren und anderen Zusatzstoffen seit langem in technischem Maße hergestellt (Angew. Chem. A. 59 (1948), S. 257).

Dabei ist es möglich, bei geeigneter Wahl der Komponenten homogene oder zellförmige Produkte und sowohl weiche, elastische als auch starre Schaumstoffe bzw. alle zwischen diesem Extremen liegenden Varianten herzustellen.

Polyurethan-Schaumstoffe werden bevorzugt durch Mischen flüssiger Komponenten hergestellt, wobei die miteinander umzusetzenden Ausgangsmaterialien entweder gleichzeitig zusammengemischt werden oder aber zunächst ein NCO-Gruppen aufweisendes Voraddukt mit Polyolen hergestellt wird, das dann verschäumt wird.

Als Katalysatoren haben sich bei der Polyurethanschaumstoff-Herstellung tertiäre Amine vor allem deshalb bewahrt, weil diese befähigt sind, sowohl die Reaktion zwischen Hydroxyl- und/oder Carboxylgruppen und den NCO-Gruppen als auch die Reaktion zwischen Wasser und den Isocyanatgruppen zu beschleunigen, wobei beim Einstufenverfahren ("one shot") die nebeneinander ablaufenden Reaktionen aufeinander abgestimmt werden können.

Außerdem finden beim Verschäumungsprozeß noch zusätzliche Vernetzungsreaktionen unter Ausbildung von Allophanat-, Biuret- und Cyanuratstrukturen statt. Bei der Komplexität der Reaktionen muß durch geeignete Katalysatorwahl der synchrone Ablauf gewährleistet sein.

Üblicherweise werden tert. aliphatische Amine mit hohem Dampfdruck wie z.B. Triethylamin, eingesetzt. Diese Amine bewirken einen ausgewogenen Ablauf der konkurrierenden Reaktionen im Kern der Schäumlinge und im Randbereich. Nach der Verschäumung diffundieren diese Amine aus den Schaumstoffen heraus. Damit wird die Gefahr von aminkatalysierten Abbaureaktionen verringert. Diese tert. Amine mit niedrigem Dampfdruck besitzen aber einen intensiven, sehr unangenehmen Eigengeruch, so daß bei deren Einsatz eine starke Belästigung des Arbeitspersonals in den Produktionsanlagen auftritt oder aber eine sehr starke Raumbelüftung notwendig ist.

Es sind daher viele Bemühungen erfolgt, Aminkatalysatoren mit niedrigerem Dampfdruck und geringerem Eigengeruch und/oder einbaufähige, bei der Polyurethanherstellung mitreagierende Aminkatalysatoren einzusetzen.

Bei den einbaufähigen Aminkatalysatoren tritt im allgemeinen das Problem auf, daß zum einen der Katalysator durch einen zu schnellen Einbau in das Polyurethan in seiner Basizität und Beweglichkeit stark erniedrigt wird und daß zum andern die Stabilität des fertigen Schaumes ungünstig beeinflußt wird (hydrolytischer und thermischer Abbau).

Es wurde nun überraschenderweise gefunden, daß bestimmte hydroxyfunktionelle Poly(dialkylaminoalkyl)ether eine hohe Aktivität über den gesamten Verlauf der Polyurethanbildung zeigen, einen niedrigen Dampfdruck und somit einen geringen Eigengeruch besitzen, während der Reaktion chemisch gebunden werden und die Stabilität eines fertigen Polyurethanteiles nicht negativ beeinflussen.

Gegenstand der Erfindung ist somit ein Verfahren zur Herstellung von gegebenenfalls zellförmigen Polyurethanen durch Umsetzung von Verbindungen mit mindestens zwei gegenüber Isocyanaten reaktionsfähigen Wasserstoffatomen vom Molekulargewicht 400 bis 10 000 mit Polyisocyanaten in Gegenwart von tertiären Aminen als Katalysatoren und gegebenenfalls in Gegenwart von Wasser und/ oder organischen Treibmitteln, weiteren an sich bekannten Katalysatoren, oberflächenaktiven und flammhemmenden Zusatzstoffen und Rettenverlängerungsmitteln vom Molekulargewicht 32-400, dadurch gekennzeichnet, daß als tertiäre Amine Poly(dialkylaminoalkyl)ether der allgemeinen Formel

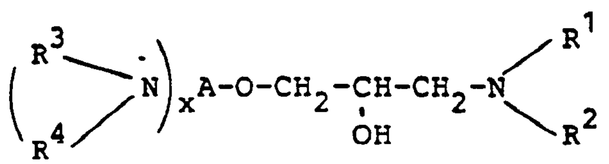

in der

A einen geradkettigen oder verzweigten, (x + 1)-wertigen, gegebenenfalls substituierten $C_2$-$C_6$-Alkylrest,

x eine ganze Zahl von 1-4

und

$R^1$-$R^4$ gleich oder verschiedene $C_1$-$C_4$-Alkylreste, die gegebenenfalls zusammen mit N einen heterocyclischen Rest bilden, vorzugsweise Methyl- oder Ethylreste, bedeuten,

verwendet werden.

Der Rest A kann z.B. durch Halogen, OH, SH, $NH_2$ substituiert sein.

In der allgemeinen Formel bedeutet A vorzugsweise einen Ethylenrest.

Erfindungsgemäß ist ferner bevorzugt, daß als tertiäre Amine Verbindungen der Formeln (I)-(IV), besonders bevorzugt der Formel (I)

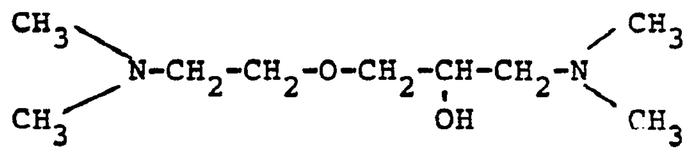

I

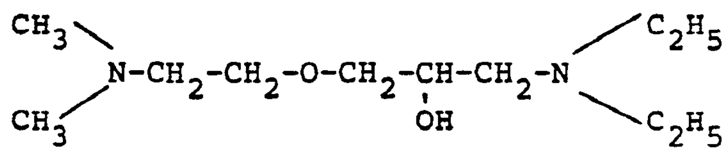

II

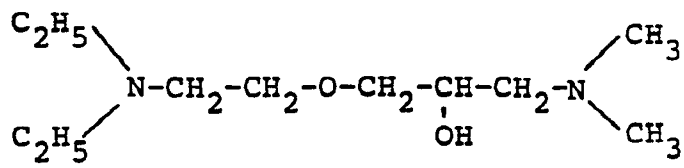

III

oder

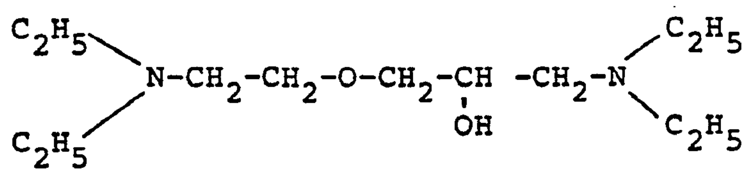

IV

verwendet werden.

Die erfindungsgemäß zu verwendenden Katalysatoren können durch Umsetzung von bekannten sekundären Aminen oder Dialkylaminoalkoholen mit Epihalohydrinen auf folgenden Wegen erhalten werden:

1)

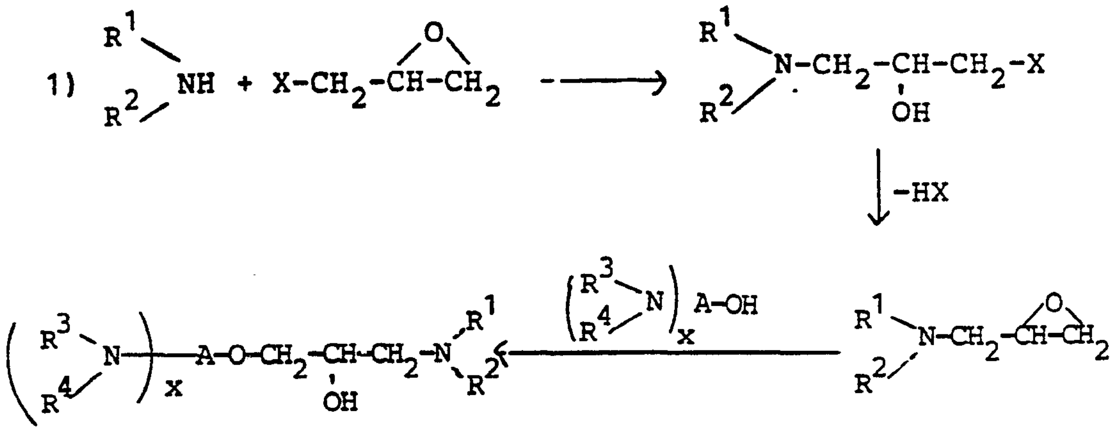

2) 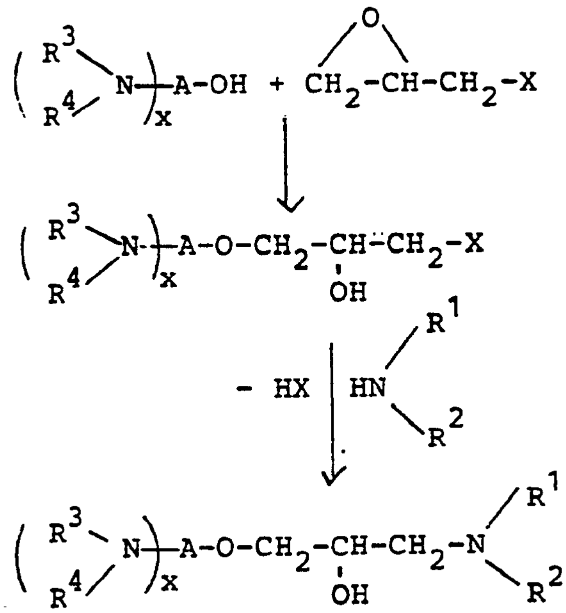

3) 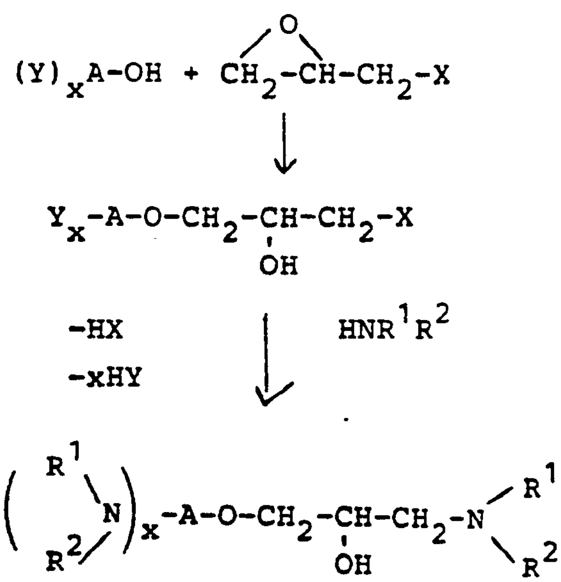

In den angegebenen Formeln besitzen die Substituenten $R^1$-$R^4$, A und x die bereits vorher angegebene Bedeutung. X und Y bedeuten unabhängig voneinander die Halogene Fluor, Chlor und/oder Brom. Die in den Herstellungswegen 1-3 beschriebenen Einzelreaktionen sind an sich alle bekannt.

Zur Herstellung der erfindungsgemäß zu verwendenden Katalysatoren wird der Weg 3 bevorzugt, obwohl er nur die Herstellung von Produkten mit gleichen Alkylaminsubstituenten zuläßt.

Die Umsetzung der Halogenalkohole mit dem Epihalohydrin wird z.B. in FR-PS 1 055 569, GB-PS 749 713 und Bull. Soc. Chim. Fr. 41, 1046 (1927) beschrieben.

Bei dieser Umsetzung entstehen als Nebenprodukte Halogenpolyether der Formel

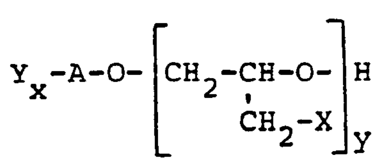

$y > 1$

die vom erwünschten Hauptprodukt (y = 1) leicht destillativ abgetrennt werden können oder aber zusammen mit diesem im nächsten Reaktionsschritt, der vorzugsweise in einem inertem organ. Lösungsmittel im Autoklaven bei höherer Temperatur (80-160°C) in Gegenwart der auf X + Y bezogen mindestens doppelt molaren Mengen eines sekundären Amins $HNR^1R^2$ durchgeführt wird, umgesetzt werden. Diese Nebenprodukte liefern ebenfalls Katalysatoren mit hoher Wirksamkeit, die das erfindungsgemäße Verfahren nicht störend beeinflussen.

Die Durchführung der zweiten Reaktionsstufe wird z.B. in Bull. Soc. Chim. Fr. 41, 1046 (1927) beschrieben.

Wie dem Fachmann bekannt ist, entstehen bei allen Umsetzungen mit Epihalohydrinen in geringer Menge auch Nebenprodukte, bei denen die Ringöffnung des Epihalohydrins zu einer primären OH-Gruppe führt. Diese brauchen je nach Herstellungsweg, nicht abgetrennt zu werden und üben keinen negativen Einfluß auf das erfindungsgemäße Verfahren aus.

Typische Beispiele für die erfindungsgemäß zu verwendenden Verbindungen sind:

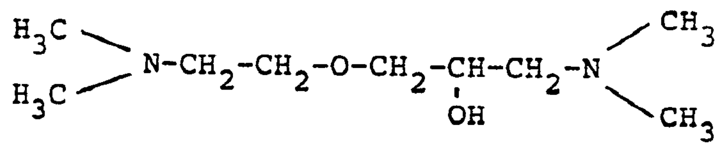

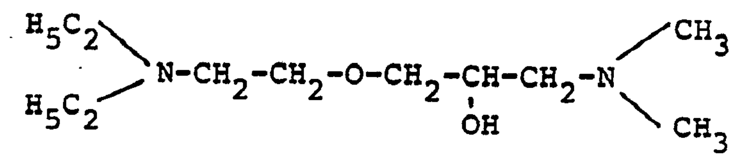

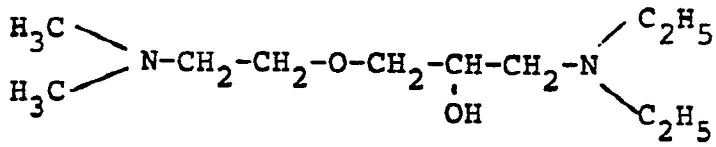

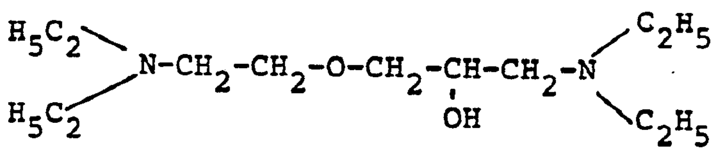

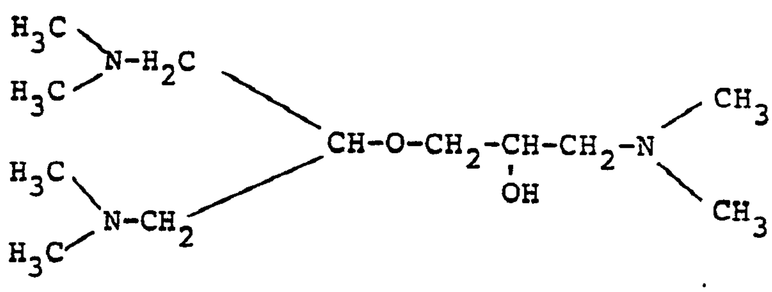

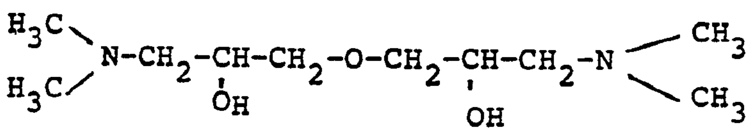

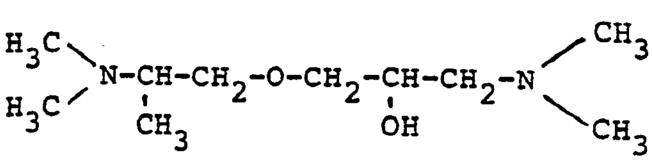

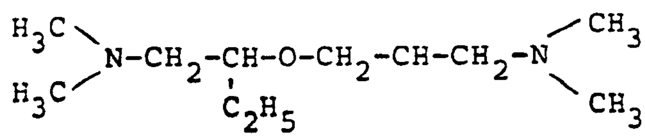

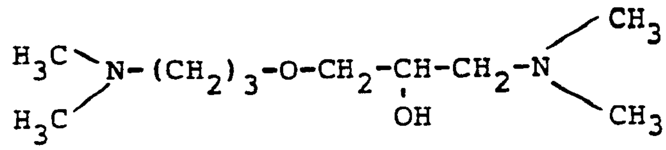

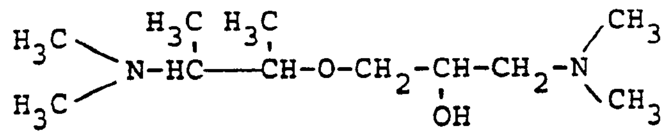

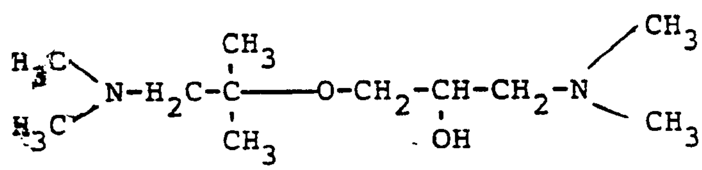

Die erfindungsgemäß zu verwendenden Katalysatoren zeichnen sich durch folgende Vorteile aus:

Sie sind aus wohlfeilen Ausgangskomponenten in hoher Ausbeute herstellbar und sind wegen ihres geringen Dampfdruckes sehr geruchsarm. Da sie in die Polyurethanmatrix miteingebaut werden, sind die mit ihrer Hilfe hergestellten Schaumstoffe geruchsarm. Sie weisen, trotz des Einbaus der Aminkatalysatoren, keine verstärkte Abbauneigung auf.

Die erfindungsgemäß zu verwendenden Katalysatoren sind trotz ihrer Einbaufähigkeit überraschenderweise sehr aktiv. Sie übertreffen z.Teil handelsübliche nichteinbaufähige Aminkatalysatoren in ihrer katalytischen Wirksamkeit.

Als besonders vorteilhaft muß angesehen werden, daß die beschriebenen Aminkatalysatoren universell einsetzbar sind, vorzugsweise werden sie bei der Herstellung von Polyurethanweichschäumen eingesetzt.

Als ein weiterer Vorteil kann die tendenziell zu beobachtende Härtesteigerung angesehen werden, die mit den erfindungemäß zu verwendenden Katalysatoren in Kombination mit bestimmten Polyolgemischen erreicht werden kann.

Für die Durchführung des erfindungsgemäßen Verfahrens werden eingesetzt:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$Q\,(NCO)_n$,

in der

n = 2-4, vorzugsweise 2,

und

Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8 - 13 C-Atomen,

bedeuten, z.B. Äthylen-diisocyanat, 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschritt 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'-und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate,

wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI", Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiiso-cyanat bzw. vom 4,4'- und/oder 2,4'-Diphenylmethandiiso-cyanat ableiten.

2. Als Ausgangskomponenten ferner Verbindungen mit mindestens zwei gegenüber Isocyanaten reaktionsfähigen Wasserstoffatomen von einem Molekulargewicht in der Regel von 400 - 10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 8000, vorzugsweise 1500 bis 4000, z.B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bisglykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. $\varepsilon$-Caprolacton, oder aus Hydroxycarbonsäuren, z.B. $\omega$-Hydroxycapronsäure, sind einsetzbar.

b) Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther; (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen

aufweisende Polybutadiene sind erfindungsgemäß geeignet.

c) Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

d) Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäß geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

h) Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

i) Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bei Verwendung von Polyätherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 - 10 000, z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

3. Gegebenenfalls als Ausgangskomponenten Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlangerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Äthanolamin, Diäthanolamin, N-Methyldiäthanolamin, Triäthanolamin und 3-Aminopropanol.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit) in Frage, wie sie bei der Selbstkondensation von Formaldehydhydrat in Gegenwart von Metallverbindungen als Katalysator und von zur Endolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-amino-methylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, *B-Methyladipinsäure, Sebazinsäure, Hydracrylsaure und Terephthalsäure; Semicarbazidoalkylen-hydrazide wie z.B. *B-Semicarbazidopropionsäurehydrazid (DE-Offenlegungsschrift 1 770 591), Semicarbazido-alkylencarbazinester wie z.B. 2-Semicar-bazidoäthyl-carbazinester (DE-Offenlegungsschrift 1 918 504) oder auch Amino-semicarbazid-Verbindungen wie z.B. *B-Aminoäthyl-semicarbazido-carbonat (DE-Offenlegungsschrift 1 902 931). Zur Steuerung ihrer Reaktivität können die Aminogruppen ganz oder teilweise durch Aldimin-bzw. Ketimin-Gruppen blockiert sein (US-Patentschrift 3 734 894; DE-Offenlegungsschrift 2 637 115).

Als Beispiele für aromatische Diamine seinen Bistranthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976)' Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491),

Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

4. Gegebenenfalls als Hilfs- und Zusatzmittel:

a) Wasser und/oder leicht flüchtige anorganische oder organische Substanzen als Treibmittel. Als organische Treibmittel kommen z.B. Aceton, Äthylacetat, halogensubstituierte Alkane wie Methylenchlorid, Chloroform, Äthylidenchlorid Vinylidenchlorid Monofluortrichlormethan, Chlordifluormethan, Dichlordifluormethan, ferner Butan, Hexan, Heptan oder Diäthyläther, als anorganische Treibmittel z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

b) Katalysatoren der an sich bekannten Art, z.B. tertiäre Amine, wie Triäthylamin, Tributylamin, N-Methylmorpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diaza-bicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-•B-phenyläthylamin, 1,2-Dimethylimidazol, 2-Methylimidazol, monocyclische und bicyclische Amidine (DE-Offenlegungsschrift 1 720 633), Bis-(dialkylamino)alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diäthyl-aminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die

Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, infrage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter ""overcharging"" gearbeitet; eine derartige Verfahrensweise ist z.B. aus den US-Patentschriften 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-Offenlegungsschriften 2 121 670 und 2 307 589 bekanntgeworden sind.

Erfindungsgemäß lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z.B. folgende Anwendung:

Als Polstermaterialien, Matratzen, Dämmstoffe, Beschichtungen, gummielastische Materialien, Lacke.

**Beispiele**

A) Herstellung der Aminkatalysatoren nach der Methode 1

1) Herstellung von Glycidyldiethylamin

Zu einem Gemisch aus 200 g (2,16 Mol) Epichlorhydrin und 3 g Wasser werden bei Raumtemperatur unter Rühren innerhalb von 1 Stunde 57,6 g (2,16 Mol) Diethylamin getropft. Mit einem Wasserbad wird die Temperatur des Reaktionsgemisches unter 30°C gehalten. Bei dieser Temperatur wird nach beendetem Zutropfen noch ca. 6 Stunden nachgerührt und das Reaktionsgemisch anschließend über Nacht stehengelassen.

Dann wird ein Gemisch aus 120 g (3 Mol) Natriumhydroxid und 330 g Wasser zugegeben und anschließend das Reaktionsgemisch bei einer Temp. unter 30°C gerührt. Hiernach werden 100 ml 50 %ige wäßr. Kaliumhydroxidlösung zugegeben, worauf eine Phasentrennung auftritt. Die obere Schicht wird abgetrennt, mit Zeolith-Perlen getrocknet, filtriert und nach Zugabe einer Kaliumhydroxid-Pastille fraktioniert destilliert.

Kp. 45-45°C / 1,2 kPa (9 mm Hg)
Brechungsindex: $n^{20}{}_D = 1{,}4320$
Ausbeute 46,8 g (16,8 % d.Th.)
$(C_2H_5)_2N\text{-}CH_2\text{-}CH$

2) Umsetzung von Glycidyldiethylamin mit 2(Di-methylamino)ethanol

Zu einem Gemisch aus 17,8 g (0,2 Mol) 2-(Di-methylamino)ethanol und 0,5 g 50 %iger wäßrigrr Kalilauge werden bei 80°C 25,8 g (0,2 Mol) Glycidyldiethylamin innerhalb von 20 Minuten zugetropft. Mit einem Wasserbad wird das Reaktionsgemisch auf 80°C gehalten. Anschließend wird 1 Stunde bei 80°C nachgerührt und dann eine fraktionierte Destillation durchgeführt.

Kp: 80-85°C / 27,3 Pa (0,28 mm Hg)
Brechungsindex: $n_D{}^{20} = 1{,}4530$
Ausbeute: 6,1 g (14 % d.Th.)

B) Herstellung der Aminkatalysatoren nach der Methode 3

3) Herstellung von 1-Chlor-3-(2-chlorethoxy)-propanol-2

Zu einem Gemisch aus 6982 g (86,73 Mol) 2-Chlorethanol und 29 ml Bortrifluorid-Etherat Lösung werden innerhalb von ca. 3 Stunden bei 60°C 2 674 g (28,91 Mol) Epichlorhydrin zugetropft. Es wird 2 Stunden bei 60°C nachgerührt und über Nacht stehengelassen. Es werden 4350 g Chlorethanol abdestilliert (130°C / 101,3 kPa (760 mm Hg) und das restliche Reaktionsgemisch neutralisiert, filtriert und destilliert.

Kp: 117-124°C / 2,0 kPa (15 mm Hg)
Ausbeute: 3895 g (77,9 % d.Th. bez. auf Epichlorhydrin).

4) Herstellung von 1-Chlor-3-[bis(chlormethyl)-methoxy]-propanol-2

Zu einer Mischung aus 500 g (3,88 Mol) Glycerindichlorhydrin und 0,39 ml Bortrifluorid-Etherat-Lösung werden innerhalb von 5-6 h bei 50°C 95,58 g (1,03 Mol) Epichlorhydrin zugetropft. Anschließend wird 5 Stunden bei 50°C nachgerührt und fraktioniert destilliert.

Kp: 125-130°C / 80 Pa (0,6 mm)
Ausbeute: 97,79 g (42,9 % d. Th.)

5) Herstellung von 1-Dimethylamino-3[bis (dimethyl-aminomethyl)-methoxy]-propanol-2

90 g 1-Chlor-3-/bis(chlormethyl)methoxy/-propanol-2 werden mit 1200 ml Toluol und 146,3 g Dimethylamin 8 Stunden in einem Autoklaven auf 120°C erhitzt. Die erhaltene Suspension wird filtriert, der Filterrückstand mit ca. 200 ml Toluol nachgewaschen und die vereinigten flüssigen organischen Phasen fraktioniert destilliert.

Kp: 100-107°C / 20Pa (0,15 mm)
Ausbeute: 40,3 g (40,2 % d. Theorie)
Das Massenspektrum stimmt mit der angegebenen Struktur überein.
Titration mit 1 n HCl: 11,8 ml/g (theor. 12,14 ml/g)

6) Herstellung von 1-Dimethylamino-3-(2-dimethyl-aminoethoxy)-propanol-2

136 g 1-Chlor-3-(2-chlorethoxy)-propanol-2 werden zusammen mit 630 ml Toluol und 325 ml flüssigem Dimethylamin in einem 1,3 l Autoklaven 10 Stunden auf 100°C erhitzt. Die erhaltene Suspension wird filtriert, der Filterrückstand mit ca. 100 ml Toluol nachgewaschen und die vereinigten flüssigen organischen Phasen fraktioniert destilliert.

Kp: 105-108°C / 160 Pa (1,2 mm)
Ausbeute: 105,9 g (70,9 % d. Th.)
Brechungsindex: $n_D{}^{20} = 1{,}4501$
Massenspektrum und $^1H$-NMR-Spektrum stimmen mit der angegebenen Struktur überein.
Titration mit 1 n HCl: 10,3 ml/g (theor. 10,52 ml/g).

Unter Verwendung dieses erfindungsgemäßen Katalysators wurden Formschaumstoffe nach bekannten Verfahren hergestellt und die mechanischen Eigenschaften der Schaumstoffe ermittelt. Außerdem wurde durch Substitution von bekannten Katalysatoren durch den erfindungsgemäßen Katalysator Reaktionszeiten von Polyurethanreaktionsgemischen gemessen und damit ein Vergleich der Aktivität dieser Katalysatoren durchgeführt.

Tabelle 1

| Rezeptur<br>Rezeptur-Bestandteile | I<br>(Gew.-Teile) | II | III | IV | V | VI | VII | VIII |
|---|---|---|---|---|---|---|---|---|
| trifunktioneller Polyether[1] OH-Zahl 28 | 100 | 100 | - | - | - | - | - | - |
| trifunktioneller Polyether[2] OH-Zahl 28 | - | - | 100 | 100 | - | - | - | - |
| hexafunktioneller Polyether[3] OH-Zahl 28 | - | - | - | - | 100 | 100 | 100 | 100 |
| Wasser | 3,1 | 3,1 | 2,6 | 2,6 | 3,0 | 3,0 | 3,1 | 3,1 |
| Katalysator[4] | 0,1 | 0,1 | 0,1 | 0,1 | 0,15 | 0,15 | 0,1 | 0,1 |
| Katalysator[5] | 0,4 | 0,4 | 0,1 | 0,1 | 0,3 | - | 0,2 | 0,2 |
| Katalysator[6] | 0,5 | - | - | - | - | - | - | - |
| Katalysator Triethylamin | - | - | - | - | - | - | 0,2 | - |
| Katalysator Dimethylethanol-amin | - | - | 0,6 | - | 0,4 | 0,4 | - | - |
| Vernetzer 56[7] | - | - | 0,6 | 0,6 | - | - | - | - |
| Dibutylzinnlaurat | 0,1 | 0,1 | - | - | - | - | - | - |
| 1-Dimethylamino-3-(2-dimethylaminoethoxy)-propanol-2 | - | 0,5 | - | 0,5 | - | 0,6 | - | 0,3 |
| Stabilisator KS 43[8] | 1,0 | 1,0 | 0,75 | 0,75 | 1,0 | 1,0 | 0,75 | 0,75 |
| 80 % TDI 80+20 % rohes MDI | - | - | 32,3 | 32,3 | - | - | - | - |
| 70 % TDI 65+30 % rohes MDI | 37,8 | 37,8 | - | - | - | - | 38,3 | 38,3 |
| TDI 80 | - | - | - | - | 33,4 | 33,4 | - | - |
| Index | 100 | 100 | 100 | 100 | 100 | 100 | 100 | 100 |
| Liegezeit, s | 5 | 5 | 4 | 4 | 5 | 4 | 5 | 5 |
| Abbindezeit, s | 51 | 43 | 51 | 52 | 46 | 44 | 62 | 59 |
| Steigzeit, s | 80 | 69 | 83 | 85 | 69 | 69 | 94 | 90 |
| Geruch des Schaumstoffes | gering | gering | gering | gering | gering | gering | stark | gering |

Tabelle 1 zeigt, daß der erfindungsgemäße Katalysator eine etwas höhere Aktivität aufweist als die typischen verbreitet eingesetzten Katalysatoren Dimethylethanolamin, Triethylamin und der Katalysator[6]. Im Austausch zu Katalysator[5] wird etwa die doppelte Menge des erfindungsgemäßen Katalysators benötigt. Bei Einsatz dieses Katalysators anstelle von Triethylamin vermindert sich der Geruch des Schaumstoffes erheblich.

Tabelle 2

| Rezeptur<br>Rezeptur-Bestandteile | IX<br>(Gew.-Teile) | X | XI | XII | XIII | XIV | XV | XVI |
|---|---|---|---|---|---|---|---|---|
| trifunktioneller Polyether[1] OH-Zahl 28 | - | - | 100 | 100 | 100 | 100 | - | - |
| trifunktioneller Polyether[2] OH-Zahl 28 | 100 | 100 | - | - | - | - | - | - |
| hexafunktioneller Polyether[3] OH-Zahl 28 | - | - | - | - | - | - | 70 | 70 |
| trifunkt. Polyether[9], OH-Zahl 28 | - | - | - | - | - | - | 30 | 30 |
| Wasser | 2,6 | 2,6 | 3,1 | 3,1 | 3,1 | 3,1 | 3,1 | 3,1 |
| Katalysator[4] | 0,1 | 0,1 | - | 0,1 | 0,1 | 0,1 | 0,15 | 0,15 |
| Katalysator[5] | 0,1 | 0,1 | 0,4 | 0,4 | 0,4 | 0,4 | 0,25 | 0,25 |
| Katalysator Dimethyl-ethanolamin | 0,6 | - | - | - | - | - | - | - |
| Katalysator[6] | 0,3 | 0,3 | 0,5 | 0,5 | - | 0,5 | - | - |
| Katalysator Triethylamin | - | - | - | - | - | - | 0,2 | - |
| Vernetzer 56[7] | 0,6 | 0,6 | - | - | - | - | - | - |
| 1-Dimethylamino-3-(2-dimethyl-aminoethoxy)-propanol-2 | - | 0,5 | - | 0,5 | 0,5 | 0,5 | - | 0,2 |
| Stabilisator KS 43[8] | 0,75 | 0,75 | 1,0 | 1,0 | 1,0 | 1,0 | 0,75 | 0,75 |
| 80 % TDI 80+20 % rohes MDI | 32,8 | 32,8 | 37,8 | 37,8 | 37,8 | 37,8 | - | - |
| 70 % TDI 65+30 % rohes MDI | - | - | - | - | - | - | 36,8 | 36,8 |
| Index | 100 | 100 | 100 | 100 | 100 | 100 | 100 | 100 |

1) Polyether: Trimethylolpropan + 87 % PO + 13 % EO,
2) " " 83 % PO + 17 % EO,
3) " Sorbit + " "
4) Bisdimethylaminoethylether
5) Triethylendiamin, 33%ig in Dipropylenglykol
6) Bisdimethylaminopropylformamid
7) (Handelsprodukt der Bayer AG)
8) Silikon-Schaumstabilisator, Handelsprodukt der Bayer AG

9) hergestellt gemäß Beispiel 3 a der DE-OS 25 19 004

Tabelle 2 (Fortsetzung)

| Rezeptur | IX | X | XI | XII | XIII | XIV | XV | XVI |
|---|---|---|---|---|---|---|---|---|
| Formteilgewicht (g) | 965 | 962 | 850 | 838 | 831 | 850 | 860 | 850 |
| Eindrückhärte, DIN 53576, Methode B, $\varepsilon$ =40%; nach 1h (N) | - | - | - | - | - | - | 195 | 209 |
| Eindrückhärte, DIN 53576, Methode B, $\varepsilon$ =40%; nach 72h (N) | 100 | 102 | 125 | 110 | 110 | 118 | 200 | 207 |
| Rohdichte, DIN 52420 ($kg/m^3$) | 43 | 43 | 36 | 37 | 35,5 | 36 | 36 | 35,5 |
| Stauchhärte, DIN 53577, $\varepsilon$ =40% (kPa) | 1,7 | 1,8 | 1,9 | 1,8 | 1,7 | 1,9 | 3,1 | 3,1 |
| Zugfestigkeit, DIN 53571 (kPa) | 75 | 70 | 75 | 90 | 90 | 90 | 100 | 90 |
| Bruchdehnung, DIN 53571 (%) | 165 | 150 | 150 | 170 | 175 | 175 | 120 | 120 |
| Druckverformungsrest, DIN 53572, $\varepsilon$ =75%, 70°C, 24 h (%) | 7,7 | 6,6 | 7,9 | 8,2 | 7,6 | 8,2 | 9,1 | 9,8 |
| Stauchhärte, ASTM-D-1564-71, $\varepsilon$ =50 % | | | | | | | | |
| vor Dampfautoklavalterung (kPa) | 2,0 | 2,2 | 2,3 | 2,1 | 2,0 | 2,3 | 3,5 | 3,6 |
| nach Dampfautoklavalterung (kPa) | -25 | -30 | -13 | ±0 | -5 | -4 | -9 | -6 |
| Druckverformungsrest, ASTM 1564, $\varepsilon$ =50% | | | | | | | | |
| vor Dampfautoklavalterung (%) | 12 | 11 | 9,5 | 12 | 12 | 12 | 9,1 | 9,8 |
| nach Dampfautoklavalterung (%) | 19 | 15 | 18 | 18 | 18 | 19 | 16 | 17 |

Die Beispiele in Tabelle 2 zeigen, daß innerhalb der Streuung der Versuchsergebnisse die mechanischen Eigenschaften der Schaumstoffe - auch nach Dampfautoklavalterung - die mit dem erfindungsgemäßen Katalysator hergestellt wurden, im allgemeinen ein mindest gleich gutes Ergebnis erzielen, wie die Schaumstoffe auf Basis herkömmlicher Katalysatoren.

**Patentansprüche**

1. Verfahren zur Herstellung von gegebenenfalls zellförmigen Polyurethanen durch Umsetzung von Verbindungen mit mindestens zwei gegenüber Isocyanaten reaktionsfähigen Wasserstoffatomen vom Molekulargewicht 400 bis 10 000 mit Polyisocyanaten in Gegenwart von tertiären Aminen als Katalysatoren und gegebenenfalls in Gegenwart von Wasser und/oder organischen Treibmitteln, weiteren an sich bekannten Katalysatoren, oberflächenaktiven und flammhemmenden Zusatzstoffen und Kettenverlängerungsmitteln vom Molekulargewicht 32-400, dadurch gekennzeichnet, daß als tertiäre Amine Poly(dialkylaminoalkyl)ether der allgemeinen Formel

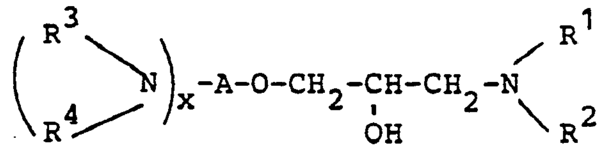

in der
A einen geradkettigen oder verzweigten (x+1)-wertigen, gegebenenfalls substituierten $C_2$-$C_6$-Alkylrest,
x eine ganze Zahl von 1-4 und
$R^1$-$R^4$ gleiche oder verschiedene $C_1$-$C_4$-Alkylreste, die gegebenenfalls zusammen mit N einen heterocyclischen Rest bilden, vorzugsweise Methyl- oder Ethylreste, bedeuten,
verwendet werden.

2. Verfahren gemäß Anspruch 1, dadurch gekennzeichnet, daß in der allgemeinen Formel A einen Ethylenrest bedeutet.;

3. Verfahren gemäß Anspruch 1 und 2, dadurch gekennzeichnet, daß als tertiäre Amine solche der Formel

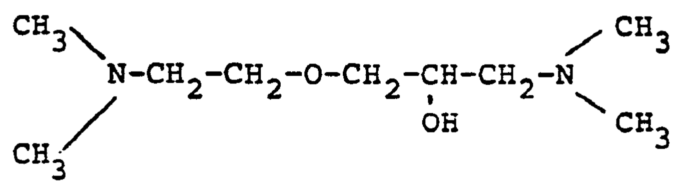

verwendet werden.

4. Verfahren gemäß Anspruch 1 und 2, dadurch gekennzeichnet, daß als tertiäre Amine solche der Formel

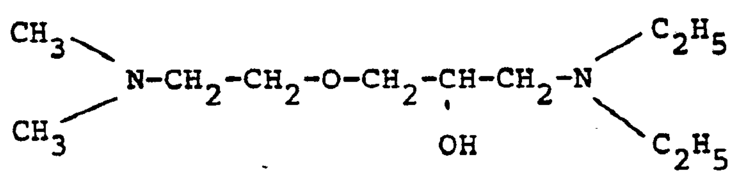

verwendet werden.

5. Verfahren gemäß Anspruch 1 und 2, dadurch gekennzeichnet, daß als tertiäre Amine solche der Formel

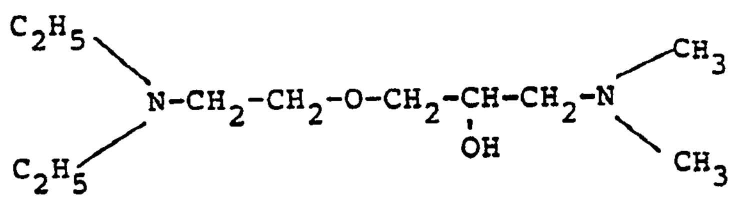

verwendet werden.

6. Verfahren gemäß Anspruch 1 und 2, dadurch gekennzeichnet, daß als tertiäre Amine solche der Formel

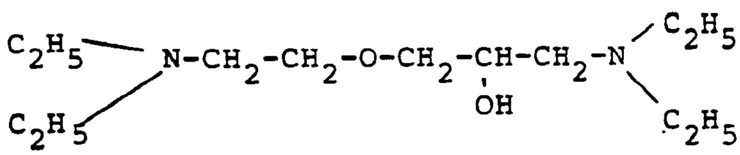

verwendet werden.

## Claims

1. Process for the production of optionally cellular polyurethanes by reacting compounds having at least two hydrogen atoms which are reactive towards isocyanates and having a molecular weight of 400 to 10.000 with polyisocyanates in the presence of tertiary amines as catalysts and optionally in the presence of water and/or organic blowing agents, other known catalysts, surface-active and flame-inhibiting additives and chain-lengthening agents having a molecular weight of 32-400, characterised in that poly(dialkylaminoalkyl)ethers of the general formula

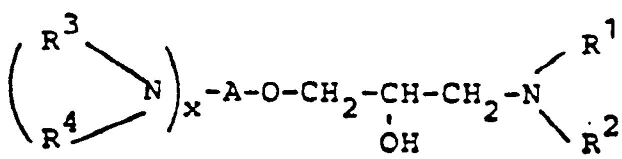

in which
A denotes a straight-chain or branched (x+1)-valent, optionally substituted $C_2$-$C_6$-alkyl radical,
x denotes an integer from 1-4 and
$R^1$-$R^4$ denote identical or different $C_1$-$C_4$-alkyl radicals, which optionally form a heterocyclic radical together with N, preferably methyl or ethyl radicals,
are used as the tertiary amines.

2. Process according to Claim 1, characterised in that A denotes an ethylene radical in the general formula.

3. Process according to Claim 1 and 2, characterised in that amines of the formula

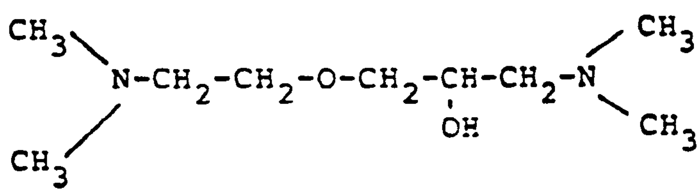

are used as the tertiary amines.

4. Process according to Claim 1 and 2, characterised in that amines of the formula

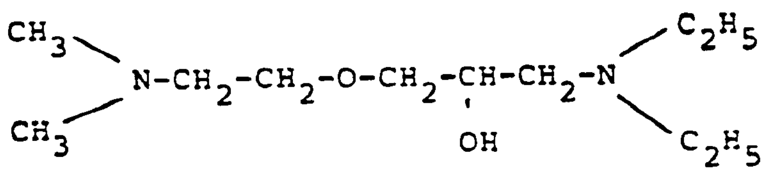

are used as the tertiary amines

5. Process according to Claim 1 and 2, characterised in that amines of the formula

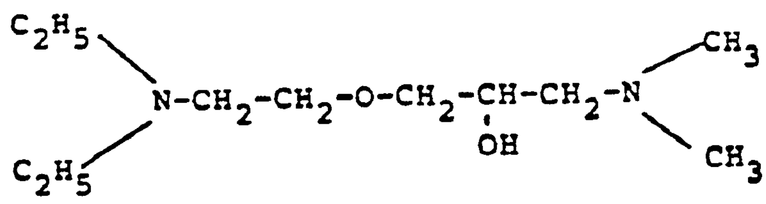

are used as the tertiary amines.

6. Process according to Claim 1 and 2, characterised in that amines of the formula

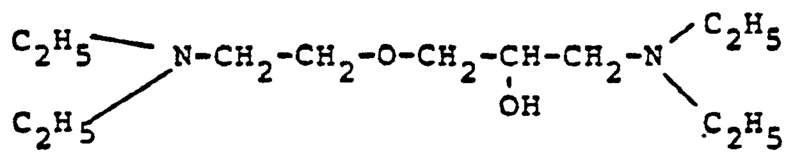

are used as the tertiary amines.

**Revendications**

1. Procédé pour préparer des polyuréthannes éventuellement alvéolaires, par réaction de composés contenant au moins deux atomes d'hydrogène capables de réagir avec les isocyanates et ayant un poids moléculaire de 400 à 10 000, avec des polyisocyanates en présence d'amines tertiaires comme catalyseurs et éventuellement en présence d'eau et/ou de porogènes organiques, d'autres catalyseurs connus en eux-mêmes, d'additifs tensioactifs et ignifuges et d'agents d'allongement des chaînes dont le poids moléculaire se situe entre 32 et 400, procédé caractérisé en ce qu'on utilise comme amines tertiaires des éthers de poly(dialkylaminoalkyle) de formule générale:

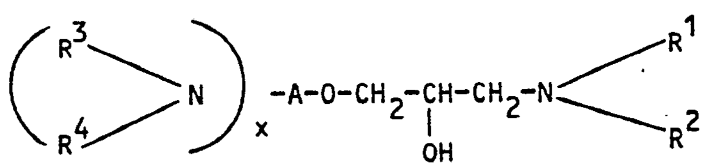

dans laquelle

A représente un reste alkyle en $C_2$ à $C_6$, linéaire ou ramifié, éventuellement substitué et ayant une valence de (x+1),

x représente un nombre entier valant 1 à 4, et

$R^1$ à $R^4$ représentent des restes alkyles en $C_1$ à $C_4$, identiques ou différents, qui forment éventuellement avec N un reste hétérocyclique, et qui sont avantageusement des restes méthyles ou éthyles.

2. Procédé selon la revendication 1, caractérisé en ce que, dans la formule générale, A représente un reste éthylène.

3. Procédé selon les revendications 1 et 2, caractérisé en ce qu'on utilise comme amines tertiaires celle répondant à la formule:

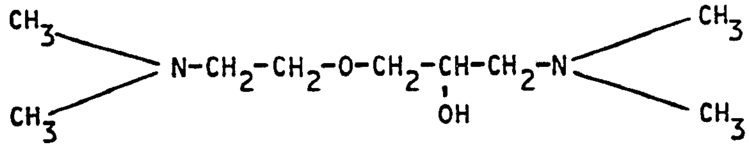

4. Procédé selon les revendications 1 et 2, caractérisé en ce qu'on utilise comme amines tertiaires celle répondant à la formule:

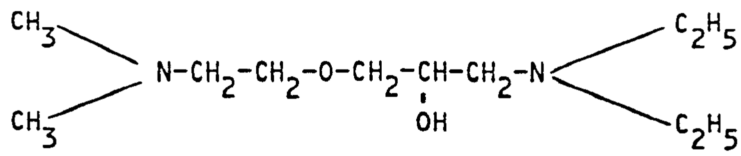

5. Procédé selon les revendications 1 et 2, caractérisé en ce qu'on utilise comme amines tertiaires celle de formule:

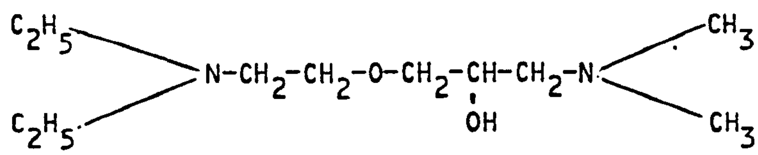

6. Procédé selon les revendications 1 et 2, caractérisé en ce qu'on utilise comme amines tertiaires celle de formule: